# EUROPEAN PATENT APPLICATION

(11) **EP 4 772 557 A1**
(43) Date of publication of application: **08.07.2026**
(21) Application number: 24859607.4
(22) Date of filing: 22.08.2024
(51) Int. Cl.: C08G 59/40, H01F 7/08, H02K 3/30

(54) **CURABLE EPOXY COMPOSITION**

(30) Priority: 29.08.2023 JP 2023139154
(71) Applicant: Daicel Corporation, Osaka-shi, Osaka 530-0011 (JP)
(72) Inventor: MIKI, Ayano, Tokyo 108-8230 (JP); TAKENAKA, Hiroto, Tokyo 108-8230 (JP)
(74) Representative: Grünecker Patent- und Rechtsanwälte PartG mbB
(86) International application number: PCT/JP2024/029852
(87) International publication number: WO 2025/047574

(57) **Abstract**

Provided is a curable epoxy composition that is curable in a short time in the presence of oxygen and is excellent in filling property. The curable epoxy composition contains an epoxy compound having an epoxy group in the molecule, and a photocationic polymerization initiator. The curable epoxy composition is for a rotary electric machine and/a semiconductor. The curable epoxy composition is preferably substantially free of a curing agent other than a photocationic polymerization initiator. The curable epoxy composition may contain a polyol.

## Description

### Technical Field

The present disclosure relates to a curable epoxy composition for use in rotary electric machines and/or semiconductors. More particularly, the present disclosure relates, in one embodiment, to a curable epoxy composition for forming a cured product to be used in a stator or a rotor in rotary electric machines. The present application claims the rights of priority on the basis of JP 2023-139154 A filed in Japan on August 29, 2023, the content of which is incorporated herein by reference.

### Background Art

Radical polymerizable compounds and epoxy resins have been used as resins for molded coil applications, in which a coil such as an ignition coil has been immersed and casted with the resin, resins for rotary electric machines (such as an insulating material, an adhesive resin for fixation of a permanent magnet, or a filler for gaps), and the like (for example, see Patent Documents 1 to 3).

For example, Patent Document 1 discloses, as a resin composition with which an insulated copper wire is to be coated, a resin composition containing a base unsaturated polyester resin and/or a base vinyl ester resin, a radical polymerizable monomer, and a photoradical polymerization initiator. In addition, Patent Document 2 discloses an epoxy resin composition for rotary electric machines, which contains an epoxy resin and a sulfonium salt cationic polymerization initiator. Patent Document 3 discloses a powder coating material containing an epoxy resin and an acid anhydride-based curing agent as resin compositions to be filled in copper wire gaps of a coil and the like.

### Citation List

### Patent Document

Patent Document 1: JP 2015-19457 A
Patent Document 2: JP 2005-245143 A
Patent Document 3: JP 2020-157183 A

### Summary of Invention

### Technical Problem

However, the resin composition containing the radical polymerizable monomer as in Patent Document 1 needs to be cured by blocking oxygen in order to undergo a radical polymerization. In the case of coating a member having a complicated structure such as a rotary electric machine with the composition and then performing curing, a method for performing curing while blocking oxygen is complicated. In addition, when the thermal cationic polymerization initiator as in Patent Document 2 is used, the curing time becomes longer. In the case of complicated curing process or a long curing time, dripping of the composition may occur during curing after coating of the member, resulting in poor handleability. In addition, the powder coating material as disclosed in Patent Document 3 is inferior in filling property into the gap.

Accordingly, an object of the present disclosure is to provide a curable epoxy composition which is curable in a short time in the presence of oxygen and is excellent in filling property.

### Solution to Problem

As a result of intensive investigations to achieve the above object, the inventors of the present disclosure have found that a curable epoxy composition including an epoxy compound having an epoxy group in the molecule and a photocationic polymerization initiator is curable in a short time in the presence of oxygen and is excellent in filling property. The present disclosure relates to what has been completed based on these findings.

The present disclosure provides a curable epoxy composition containing an epoxy compound having an epoxy group in the molecule and a photocationic polymerization initiator, wherein the curable epoxy composition is for a rotary electric machine and/or a semiconductor.

The curable epoxy composition is preferably substantially free of a curing agent other than the photocationic polymerization initiator.

The curable epoxy composition preferably contains a polyol.

The content proportion of the epoxy compound with respect to a total amount of a cationically curable compound is preferably 90 mass% or more.

The curable epoxy composition is preferably substantially free of a radical polymerizable compound.

The curable epoxy composition preferably contains an inorganic filler.

The curable epoxy composition is preferably liquid at 25°C.

The curable epoxy composition is preferably for impregnation of a stator coil of the rotary electric machine, or for magnet fixation to fix a magnet inserted into a hole provided in a rotor core of the rotary electric machine to an inner wall of the hole.

The present disclosure also provides a cured product of the curable epoxy composition.

The present disclosure also provides a stator for a rotary electric machine, being formed to cover a stator coil.

The present disclosure also provides a stator for a rotary electric machine, the stator including the cured product coating a winding of a rotor.

### Advantageous Effects of Invention

The curable epoxy composition of the present disclosure is curable in a short time in the presence of oxygen, and is excellent in filling property. Therefore, when a member having a complicated structure is coated with the curable epoxy composition, dripping of the composition is less likely to occur during curing, and stickiness of a resin surface is reduced at an early stage, resulting in excellent handleability. In addition, the curing can be performed in a short time, thereby leading to a reduction in the amount of CO₂ emission and a reduction in environmental load.

### Description of Embodiments

### Curable Epoxy Composition

The curable epoxy composition of the present disclosure is a composition having both photocurability and thermal curability, which contains at least an epoxy compound having an epoxy group in the molecule and a photocationic polymerization initiator.

### Epoxy Compound

An example of the epoxy compound includes a compound having one or more epoxy groups (oxiranyl groups) in the molecule. Among these, the epoxy compound is preferably a compound having two or more (preferably from 2 to 6, more preferably from 2 to 4) epoxy groups in the molecule. For the epoxy compound, a single type may be used alone or two or more types may be used in combination.

For the epoxy compound, a known or commonly used epoxy compound can be used, and examples thereof include, but are not particularly limited to, alicyclic epoxy compounds (alicyclic epoxy resins); aliphatic epoxy compounds (aliphatic epoxy resins) such as aliphatic polyglycidyl ethers; aromatic epoxy compounds (aromatic epoxy resins) such as bisphenol A type epoxy compounds; and heterocyclic epoxy compounds (heterocyclic epoxy resins).

The alicyclic epoxy compound is a compound having at least an alicyclic (aliphatic hydrocarbon ring) structure and an epoxy group in the molecule. For the alicyclic epoxy compound, a known or commonly used alicyclic epoxy compound can be used, and examples thereof include, but are not particularly limited to a compound (I) having an epoxy group (referred to as "alicyclic epoxy group") composed of two adjacent carbons and an oxygen atom that constitute an alicyclic ring in the molecule; a compound (II) in which an epoxy group is directly bonded to an alicyclic ring through a single bond; and a compound (III) having an alicyclic ring and a glycidyl ether group in the molecule (a glycidyl ether type epoxy compound).

An example of the compound (I) having an alicyclic epoxy group in the molecule includes a compound having a cyclohexene oxide group, such as a compound represented by Formula (i):

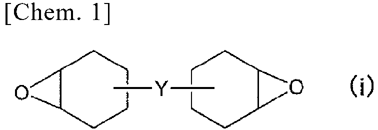

In Formula (i), Y represents a single bond or a linking group (a divalent group having one or more atoms). Examples of the linking group include a divalent hydrocarbon group, an alkenylene group in which the carbon-carbon double bond is partially or totally epoxidized, a carbonyl group, an ether bond, an ester bond, a carbonate group, an amide group, and a linking group in which a plurality of the above-described groups are linked. It is to be noted that a substituent such as an alkyl group may be bonded to one or more of carbons constituting the cyclohexane ring (cyclohexene oxide group) in Formula (i).

Examples of the divalent hydrocarbon group include a linear or branched alkylene group having from 1 to 18 carbons and a divalent alicyclic hydrocarbon group. Examples of the linear or branched alkylene group having from 1 to 18 carbons include a methylene group, a methylmethylene group, a dimethylmethylene group, an ethylene group, a propylene group, and a trimethylene group. Examples of the divalent alicyclic hydrocarbon group include divalent cycloalkylene groups (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in which the carbon-carbon double bond is partially or totally epoxidized (may be referred to as an "epoxidized alkenylene group"), include linear or branched alkenylene groups having from 2 to 8 carbons, such as a vinylene group, a propenylene group, a 1-butenylene group, a 2-butenylene group, a butadienylene group, a pentenylene group, a hexenylene group, a heptenylene group, and an octenylene group. In particular, the epoxidized alkenylene group is preferably an epoxidized alkenylene group in which all of the carbon-carbon double bonds are epoxidized, and more preferably an epoxidized alkenylene group having from 2 to 4 carbons in which all of the carbon-carbon double bonds are epoxidized.

Representative examples of the alicyclic epoxy compound represented by Formula (i) above include (3,4,3',4'-diepoxy)bicyclohexyl and compounds represented by Formulae (i-1) to (i-10) below. In Formulae (i-5) and (i-7) below, l and m each represent an integer from 1 to 30. R' in Formula (i-5) below is an alkylene group having from 1 to 8 carbons, and, among these, a linear or branched alkylene group having from 1 to 3 carbons, such as a methylene group, an ethylene group, a propylene group, or an isopropylene group, is preferable. In Formulae (i-9) and (i-10) below, n1 to n6 each represent an integer from 1 to 30. In addition, other examples of the alicyclic epoxy compound represented by Formula (i) above include 2,2-bis(3,4-epoxycyclohexyl)propane, 1,2-bis(3,4-epoxycyclohexan-1-yl)ethane, 1,2-epoxy-1,2-bis(3,4-epoxycyclohexan-1-yl)ethane, and bis(3,4-epoxycyclohexylmethyl)ether.

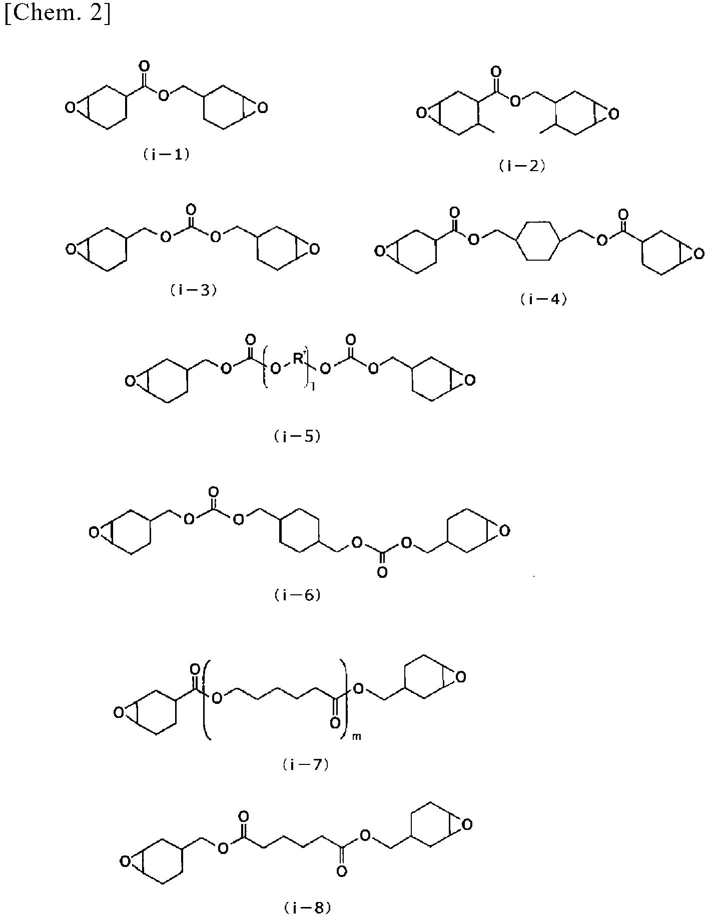

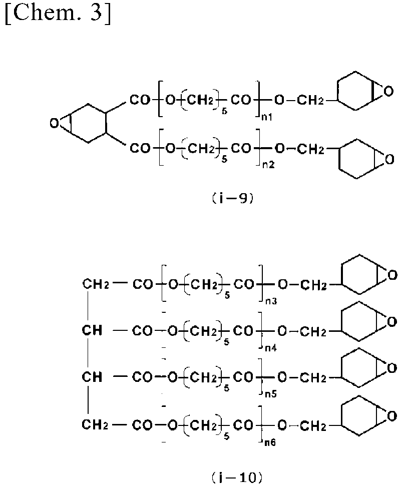

Also, an example of the compound (1) having an alicyclic epoxy group in the molecule includes an epoxy-modified siloxane. An example of the epoxy-modified siloxane includes a chain or cyclic polyorganosiloxane having a constituent unit represented by Formula (i') below.

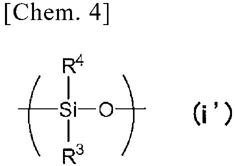

In Formula (i'), R³ represents a substituent including a group represented by Formula (1a) below or a substituent including a group represented by Formula (1b) below, and R⁴ represents an alkyl group or an alkoxy group.

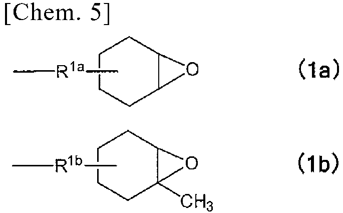

In Formulae (1a) and (1b), R^{1a} and R^{1b} may be the same or different and each represent a linear or branched alkylene group, and examples thereof include linear or branched alkylene groups having from 1 to 10 carbons, such as a methylene group, a methylmethylene group, a dimethylmethylene group, an ethylene group, a propylene group, a trimethylene group, a tetramethylene group, a pentamethylene group, a hexamethylene group, and a decamethylene group.

The epoxy equivalent (in accordance with JIS K7236) of the epoxy-modified siloxane is, for example, from 100 to 400 and preferably from 150 to 300.

For the epoxy-modified siloxane, for example, a commercially available product can be used, such as a compound represented by Formula (i'-1) below (product name "X-40-2670", manufactured by Shin-Etsu Chemical Co., Ltd.).

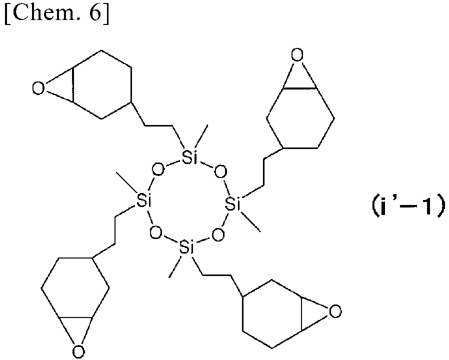

An example of the compound (II) in which an epoxy group is directly bonded to an alicyclic ring through a single bond includes a compound represented by Formula (ii) below.

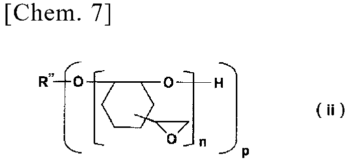

In Formula (ii), R" is a group resulting from elimination of p hydroxy groups (-OHs) from a structural formula of a p-hydric alcohol (p-valent organic group), where p and n each represent a natural number. An example of the p-hydric alcohol [R"(OH)ₚ] include a polyhydric alcohol (such as an alcohol having from 1 to 15 carbons), such as 2,2-bis(hydroxymethyl)-1-butanol. p is preferably from 1 to 6, and n is preferably from 1 to 30. When p is two or more, each pair of (outer) parentheses may have the same or different n therein. Examples of the compound represented by Formula (ii) above specifically include a 1,2-epoxy-4-(2-oxiranyl)cyclohexane adduct of 2,2-bis(hydroxymethyl)-1-butanol (such as, product name "EHPE3150" (manufactured by Daicel Corporation)).

An example of the compound (III) having an alicyclic ring and a glycidyl ether group in the molecule includes a glycidyl ether of an alicyclic alcohol (in particular, an alicyclic polyhydric alcohol). More specifically, examples of the compound (III) include compounds resulting from hydrogenation of a bisphenol A type epoxy compound (a hydrogenated bisphenol A type epoxy compound), such as 2,2-bis[4-(2,3-epoxypropoxy)cyclohexyl]propane and 2,2-bis[3,5-dimethyl-4-(2,3-epoxypropoxy)cyclohexyl]propane; compounds resulting from hydrogenation of a bisphenol F type epoxy compound (a hydrogenated bisphenol F type epoxy compound), such as bis[o,o-(2,3-epoxypropoxy)cyclohexyl]methane, bis[o,p-(2,3-epoxypropoxy)cyclohexyl]methane, bis[p,p-(2,3-epoxypropoxy)cyclohexyl]methane, and bis[3,5-dimethyl-4-(2,3-epoxypropoxy)cyclohexyl]methane; a hydrogenated bisphenol type epoxy compound; a hydrogenated phenol novolac type epoxy compound; a hydrogenated cresol novolac type epoxy compound; a hydrogenated cresol novolac type epoxy compound of bisphenol A; a hydrogenated naphthalene type epoxy compound; a hydrogenated epoxy compound of an epoxy compound produced from trisphenolmethane; and other hydrogenated epoxy compounds of an epoxy compound having an aromatic ring.

Examples of the aromatic epoxy compound include epi-bis type glycidyl ether type epoxy resins resulting from a condensation reaction of bisphenols (such as bisphenol A, bisphenol F, bisphenol S, and fluorenebisphenol) and epihalohydrin; high molecular weight epi-bis type glycidyl ether type epoxy resins produced by further subjecting the above-described epi-bis type glycidyl ether type epoxy resins to an addition reaction with the above-described bisphenols;
novolac alkyl type glycidyl ether type epoxy resins produced by subjecting phenols (for example, phenol, cresol, xylenol, resorcin, catechol, bisphenol A, bisphenol F, and bisphenol S) and aldehydes (for example, formaldehyde, acetaldehyde, benzaldehyde, hydroxybenzaldehyde, and salicylaldehyde) to a condensation reaction to produce polyhydric alcohols, and then further subjecting the polyhydric alcohols to a condensation reaction with epihalohydrins;
and an epoxy compound in which two phenolic skeletons are bonded to the 9-position of a fluorene ring, and glycidyl groups are each bonded directly or via an alkyleneoxy group to an oxygen atom produced by removing hydrogen atoms from hydroxy groups of these phenolic skeletons.

Examples of the aliphatic epoxy compound include a glycidyl ether of a q-hydric alcohol, the alcohol having no cyclic structure (q is a natural number); glycidyl esters of monovalent or polyvalent carboxylic acids (e.g., acetic acid, propionic acid, butyric acid, stearic acid, adipic acid, sebacic acid, maleic acid, and itaconic acid); epoxidized products of oil and/or fats having a double bond, such as an epoxidized linseed oil, an epoxidized soybean oil, and an epoxidized castor oil; and epoxidized products of polyolefins (including a polyalkadiene), such as epoxidized polybutadiene. Here, examples of the q-hydric alcohol without a cyclic structure include monohydric alcohols, such as methanol, ethanol, 1-propyl alcohol, isopropyl alcohol, and 1-butanol; dihydric alcohols, such as ethylene glycol, 1,2-propanediol, 1,3-propanediol, 1,4-butanediol, neopentyl glycol, 1,6-hexanediol, diethylene glycol, triethylene glycol, tetraethylene glycol, dipropylene glycol, polyethylene glycol, and polypropylene glycol; and trihydric or higher polyhydric alcohols, such as glycerin, diglycerin, erythritol, trimethylolethane, trimethylolpropane, pentaerythritol, dipentaerythritol, and sorbitol. In addition, the q-hydric alcohol may be a polyether polyol, a polyester polyol, a polycarbonate polyol, a polyolefin polyol, and the like.

An example of the heterocyclic epoxy compound includes an epoxy compound having an epoxy group and a heterocyclic ring other than the epoxy group in the molecule (such as a non-aromatic heterocyclic ring such as a tetrahydrofuran ring, a tetrahydropyran ring, a morpholine ring, a chroman ring, an isochroman ring, a tetrahydrothiophene ring, a tetrahydrothiopyran ring, an aziridine ring, a pyrrolidine ring, a piperidine ring, a piperazine ring, an indoline ring, a 2,6-dioxabicyclo[3.3.0]octane ring, a 1,3,5-triazacyclohexane ring, a 1,3,5- triazacyclohexa-2,4,6-trione ring (isocyanuric ring), or a dihydroimidazo[4,5-d]imidazole-2,5-dione ring (glycoluril ring); or an aromatic heterocyclic ring such as a thiophene ring, a pyrrole ring, a furan ring, or a pyridine ring). Among them, the heterocyclic epoxy compound is preferably those composed of a carbon atom, a hydrogen atom, an oxygen atom, and a nitrogen atom.

Examples of the heterocyclic epoxy compound include an epoxy compound having an isocyanuric ring (isocyanuric ring-containing epoxy compound) and an epoxy compound having a glycoluril ring (glycoluril ring-containing epoxy compound). The number of epoxy groups in the molecule of the isocyanuric ring-containing epoxy compound is not particularly limited, but is preferably from 1 to 6, and more preferably from 1 to 3. The number of epoxy groups in the molecule of the glycoluril ring-containing epoxy compound is not particularly limited, but is preferably from 1 to 6, and more preferably from 2 to 4.

An example of the isocyanuric ring-containing epoxy compound includes a compound represented by Formula (iii) below.

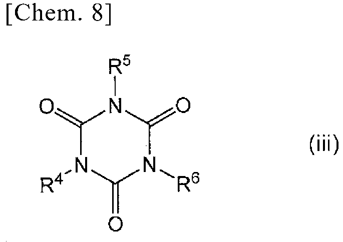

In Formula (iii), R⁴ to R⁶ are the same or different, and each represent a hydrogen atom or a monovalent organic group. However, at least one of R⁴ to R⁶ is a monovalent organic group containing an epoxy group. Examples of the monovalent organic group include monovalent aliphatic hydrocarbon groups (such as an alkyl group and alkenyl group); a monovalent aromatic hydrocarbon group (such as an aryl group); a monovalent heterocyclic group; a monovalent group formed with two or more of aliphatic hydrocarbon groups, alicyclic hydrocarbon groups, and aromatic hydrocarbon groups being bonded to each other. It is to be noted that the monovalent organic group may have a substituent (such as a hydroxy group, a carboxy group, or a halogen atom). An example of the monovalent organic group containing an epoxy group includes a monovalent organic group containing an epoxy group described below, such as an epoxy group, a glycidyl group, a 2-methylepoxypropyl group, or a cyclohexene oxide group.

In particular, R⁴ to R⁶ in Formula (iii) are the same or different and are groups having a group represented by the following Formula (iiia) or groups having a group represented by the following Formula (iiib), and at least one of R⁴ to R⁶ is preferably a group having a group represented by Formula (iiia).

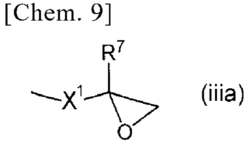

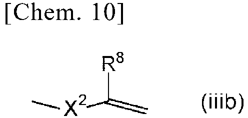

R⁷ and R⁸ in Formulae (iiia) and (iiib) above are the same or different, and each represent a hydrogen atom or an alkyl group having from 1 to 8 carbons. Examples of the alkyl group having from 1 to 8 carbons include linear or branched alkyl groups, such as a methyl group, an ethyl group, a propyl group, an isopropyl group, a butyl group, an isobutyl group, an s-butyl group, a pentyl group, a hexyl group, a heptyl group, and an octyl group. Among these, linear or branched alkyl groups having from 1 to 3 carbons, such as a methyl group, an ethyl group, a propyl group, and an isopropyl group are preferred. R⁷ and R⁸ in Formulae (iiia) and (iiib) above are particularly preferably hydrogen atoms.

X¹ and X² in Formulae (iiia) and (iiib) above are the same or different, and each represent a divalent organic group. The divalent organic group may be a divalent hydrocarbon group, or may be a group in which two or more divalent hydrocarbon groups are bonded to each other via a linking group such as an ester bond or an ether bond.

R⁴ to R⁶ in Formula (iii) are the same or different and may have only one or two or more selected from the group consisting of a group having the group represented by Formula (iiia) above and a group having the group represented by Formula (iiib) above. The number of the groups having the group represented by Formula (iiia) above and/or the group having the group represented by Formula (iiib) above, which are contained in each of R⁴ to R⁶, is preferably from 1 to 3, more preferably 1 or 2.

More specifically, examples of the isocyanuric ring-containing epoxy compound include a compound represented by the following Formula (iii-1), a compound represented by the following Formula (iii-2), and a compound represented by the following Formula (iii-3).

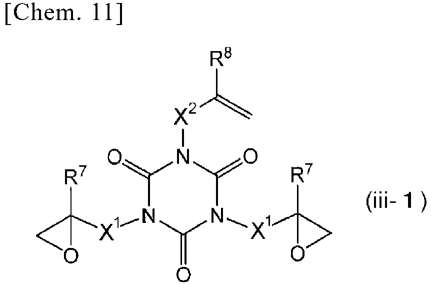

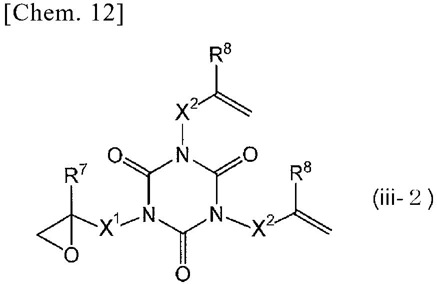

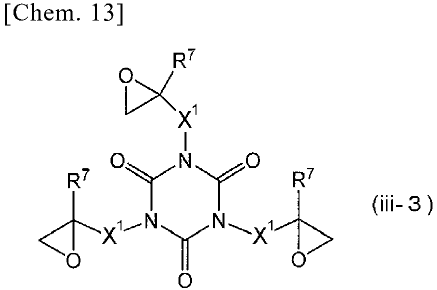

In Formulae (iii-1) to (iii-3), R⁷, R⁸, X¹, and X² are the same or different and are the same as those in Formulae (iiia) and (iiib).

Representative examples of the compound represented by Formula (iii-1) above include monoallyl diglycidyl isocyanurate, 1-allyl-3,5-bis(2-methylepoxypropyl)isocyanurate, 1-(2-methylpropenyl)-3,5-diglycidylisocyanurate, and 1-(2-methylpropenyl)-3,5-bis(2-methylepoxypropyl)isocyanurate.

Representative examples of the compound represented by Formula (iii-2) above include diallyl monoglycidyl isocyanurate, 1,3-diallyl-5-(2-methylepoxypropyl)isocyanurate, 1,3-bis(2-methylpropenyl)-5-glycidylisocyanurate, and 1,3-bis(2-methylpropenyl)-5-(2-methylepoxypropyl) isocyanurate.

Representative examples of the compound represented by Formula (iii-3) above include triglycidyl isocyanurate and tris(2-methylepoxypropyl)isocyanurate.

Examples of commercially available products of the isocyanuric ring-containing epoxy compound include TEPIC series (TEPIC-G, TEPIC-S, TEPIC-SS, TEPIC-HP, TEPIC-L, TEPIC-PAS, TEPIC-VL, and TEPIC-UC) manufactured by Nissan Chemical Corporation.

It is to be noted that the isocyanuric ring-containing epoxy compound for use may be preliminarily modified by adding a compound that reacts with an epoxy group, such as an alcohol or an acid anhydride.

An example of the glycoluril ring-containing epoxy compound includes a compound represented by Formula (iv) below.

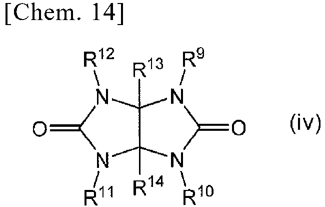

In Formula (iv), R⁹ to R¹² are the same or different, and each represent a hydrogen atom or a monovalent organic group. However, at least one of R⁹ to R¹² is a monovalent organic group containing an epoxy group. Examples of the monovalent organic group include the same monovalent organic group as those in the isocyanuric ring-containing epoxy compounds described above. It is to be noted that the monovalent organic group may have a substituent. Among these, the monovalent organic group is preferably a substituted or unsubstituted alkyl group, a substituted or unsubstituted alkenyl group, or a monovalent organic group containing an epoxy group. Therefore, R⁹ to R¹² are preferably the same or different and are each preferably a hydrogen atom, a substituted or unsubstituted alkyl group, a substituted or unsubstituted alkenyl group, or a monovalent organic group containing an epoxy group.

The monovalent organic group containing an epoxy group is an organic group containing at least one epoxy group (oxirane ring), and examples of thereof include a group in which at least one double bond contained in a linear or branched aliphatic hydrocarbon group having a carbon-carbon double bond, such as an alkenyl group, is epoxidized; and a group in which at least one double bond contained in a cyclic aliphatic hydrocarbon group having a carbon-carbon double bond (such as a cycloalkenyl group; or a cycloalkenylalkyl group, such as a cyclohexenylethyl group) is epoxidized. More specific examples thereof include a 1,2-epoxyethyl group (epoxy group), a 1,2-epoxypropyl group, a 2,3-epoxypropyl group (glycidyl group), a 2,3-epoxy-2-methylpropyl group (methylglycidyl group), a 3,4-epoxybutyl group, a 3-glycidyloxypropyl group, a 3,4-epoxycyclohexylmethyl group, and a 2-(3,4-epoxycyclohexyl)ethyl group.

Examples of the alkenyl group include substituted or unsubstituted alkenyl groups, such as a vinyl group, an allyl group, a butenyl group, a pentenyl group, and a hexenyl group. Examples of the substituent include a halogen atom, a hydroxy group, and a carboxy group. Among these, the substituent is preferably an ω-alkenyl group (an alkenyl group having a carbon-carbon unsaturated double bond at its end) is preferred, more preferably an ω-alkenyl group having from 2 to 6 carbons, and still more preferably an allyl group.

In Formula (iv), R¹³ and R¹⁴ are the same or different and each represent a hydrogen atom or a monovalent organic group. Examples of the monovalent organic group include the same monovalent organic group as those in the isocyanuric ring-containing epoxy compounds described above.

In particular, R⁹ to R¹² in Formula (iv) are the same or different, and are each a group having a group represented by the following Formula (iva) or a group having a group represented by the following Formula (ivb), and at least one of R⁹ to R¹² is preferably a group having a group represented by Formula (iva).

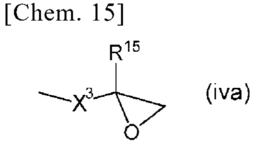

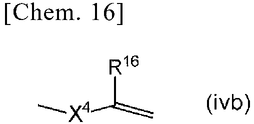

R¹⁵ and R¹⁶ in Formulae (iva) and (ivb) above are the same or different, and each represent a hydrogen atom or an alkyl group having from 1 to 8 carbons. Examples of the alkyl group having from 1 to 8 carbons include linear or branched alkyl groups, such as a methyl group, an ethyl group, a propyl group, an isopropyl group, a butyl group, an isobutyl group, an s-butyl group, a pentyl group, a hexyl group, a heptyl group, and an octyl group. Among these, linear or branched alkyl groups having from 1 to 3 carbons, such as a methyl group, an ethyl group, a propyl group, and an isopropyl group are preferred. R¹⁵ and R¹⁶ in Formulae (iva) and (ivb) are particularly preferably hydrogen atoms.

X³ and X⁴ in Formulae (iva) and (ivb) above are the same or different, and each represent a divalent organic group. The divalent organic group may be a divalent hydrocarbon group, or may be a group in which two or more divalent hydrocarbon groups are bonded to each other via a linking group such as an ester bond or an ether bond.

R⁹ to R¹² in Formula (iv) are the same or different and may have only one or two or more selected from the group consisting of a group having the group represented by Formula (iva) above and a group having the group represented by Formula (ivb) above. The number of the groups having the group represented by Formula (iva) above and/or the group having the group represented by Formula (ivb) above, contained in each of R⁹ to R¹², is preferably from 1 to 3, more preferably 1 or 2.

More specifically, examples of the glycoluril ring-containing epoxy compound include a compound represented by the following Formula (iv-1), a compound represented by the following Formula (iv-2), a compound represented by the following Formula (iv-3), a compound represented by the following Formula (iv-4), a compound represented by the following Formula (iv-5), and a compound represented by the following Formula (iv-6).

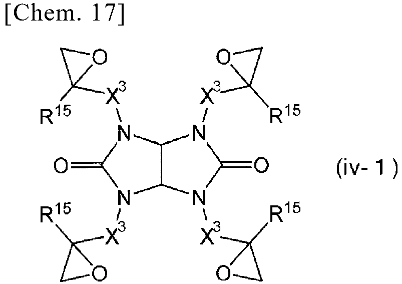

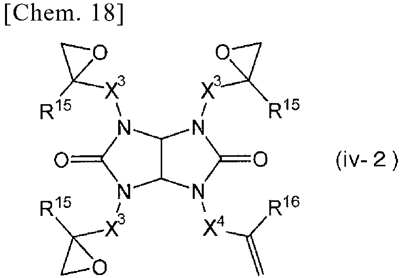

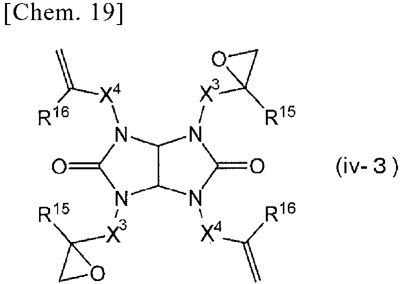

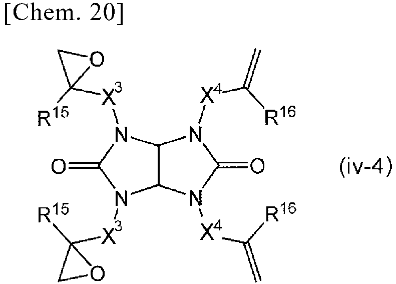

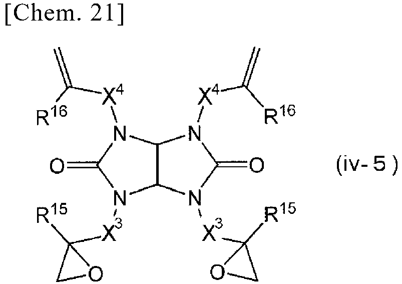

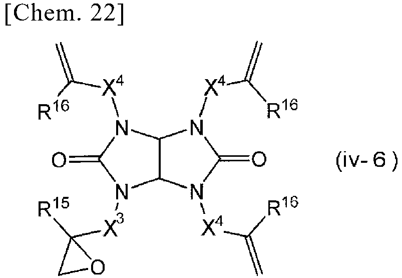

In Formulae (iv-1) to (iv-6), R¹⁵, R¹⁶, X³, and X⁴ are the same or different and are the same as those in Formulae (iva) and (ivb).

Representative examples of the compound represented by Formula (iv-1) above include 1,3,4,6-tetraglycidyl glycoluril and tetrakis(2-methylepoxypropyl)glycoluril.

Representative examples of the compound represented by Formula (iv-2) above include 1-allyl-3,4,6-triglycidyl glycoluril, 1-allyl-3,4,6-tris(2-methylepoxypropyl)glycoluril, 1-(2-methylpropenyl)-3,4,6-triglycidyl glycoluril, and 1-(2-methylpropenyl)-3,4,6- tris(2-methylepoxypropyl)glycoluril.

Representative examples of the compound represented by Formula (iv-3) above include 1,4-diallyl-3,6-diglycidyl glycoluril, 1,4-diallyl-3,6-bis(2-methylepoxypropyl) glycoluril, 1,4-bis(2-methylpropenyl)-3,6-diglycidyl glycoluril, and 1,4-bis (2-methylpropenyl)-3,6-bis(2-methylepoxypropyl) glycoluril.

Representative examples of the compound represented by Formula (iv-4) above include 1,3-diallyl-4,6-diglycidyl glycoluril, 1,3-diallyl-4,6-bis(2-methylepoxypropyl) glycoluril, 1,3-bis(2-methylpropenyl)-4,6-diglycidyl glycoluril, and 1,3-bis(2-methylpropenyl)-4,6-bis(2-methylepoxypropyl) glycoluril.

Representative examples of the compound represented by Formula (iv-5) above include 1,6-diallyl-3,4-diglycidyl glycoluril, 1,6-diallyl-3,4-bis(2-methylepoxypropyl)glycoluril, 1,6-bis(2-methylpropenyl)-3,4-diglycidyl glycoluril, and 1,6-bis(2-methylpropenyl)-3,4-bis (2-methylepoxypropyl) glycoluril.

Representative examples of the compound represented by Formula (iv-6) above include 1,3,4-triallyl-6-glycidyl glycoluril, 1,3,4-triallyl-6-(2-methylepoxypropyl)glycoluril, 1,3,4-tris(2-methylpropenyl)-6-glycidyl glycoluril, and 1,3,4-tris(2-methylpropenyl)-6-(2-methylepoxypropyl)glycoluril.

It is to be noted that the glycoluril ring-containing epoxy compound may be preliminarily modified by adding a compound that reacts with an epoxy group, such as an alcohol or an acid anhydride.

The content proportion of the epoxy compound in the curable epoxy composition is preferably 10 mass% or more with respect to the total amount (100 mass%) of the curable epoxy composition. In one aspect of the curable epoxy composition (for example, in a case in which the inorganic filler is not contained), the content proportion of the epoxy compound is more preferably from 60 to 99.5 mass%, still more preferably from 70 to 99 mass%, and even still more preferably from 75 to 98.5 mass%. In another aspect of the curable epoxy composition (for example, in a case in which the inorganic filler is contained), the content proportion of the epoxy compound is more preferably from 10 to 50 mass%, still more preferably from 15 to 40 mass%, and even still more preferably from 18 to 30 mass%.

In the present description, the content of each component (such as the epoxy compound and the photocationic polymerization initiator) contained in the curable epoxy composition can be appropriately selected from the range described, and the total content of the respective components is therefore 100 mass% or less.

### Photocationic Polymerization Initiator

Examples of the photocationic polymerization initiator include a hexafluoroantimonate salt, a pentafluorohydroxyantimonate salt, a hexafluorophosphate salt, and a hexafluoroarsenate salt, a tetrakis(pentafluorophenyl)borate salt, and a pentafluoroethylphosphate salt. For the photocationic polymerization initiator, a single type may be used alone or two or more types may be used in combination.

In addition, examples of the photocationic polymerization initiator include sulfonium salts (in particular, triarylsulfonium salts), such as a triarylsulfonium hexafluorophosphate (such as p-phenylthiophenyl diphenylsulfonium hexafluorophosphate) and a triarylsulfonium hexafluoroantimonate; iodonium salts, such as a diaryliodonium hexafluorophosphate, a diaryliodonium hexafluoroantimonate, bis(dodecylphenyl)iodonium tetrakis(pentafluorophenyl)borate, and iodonium [4-(4-methylphenyl-2-methylpropyl)phenyl]hexafluorophosphate; a phosphonium salt, such as tetrafluorophosphonium hexafluorophosphate; and a pyridinium salt, such as N-hexylpyridinium tetrafluoroborate.

Specific examples of the photocationic polymerization initiator include (4-hydroxyphenyl)methylbenzylsulfonium tetrakis(pentafluorophenyl)borate, 4-(4-biphenylylthio)phenyl-4-biphenylylphenylsulfonium tetrakis(pentafluorophenyl)borate, 4-(phenylthio)phenyldiphenylsulfonium phenyltris(pentafluorophenyl)borate, [4-(4-biphenylylthio)phenyl]-4-biphenylylphenylsulfonium phenyltris(pentafluorophenyl)borate, diphenyl[4-(phenylthio)phenyl]sulfonium tris(pentafluoroethyl)trifluorophosphate, diphenyl[4-(phenylthio)phenyl]sulfonium tetrakis(pentafluorophenyl)borate, diphenyl[4-(phenylthio)phenyl]sulfonium hexafluorophosphate, 4-(4-biphenylylthio)phenyl-4-biphenylylphenylsulfoniumtris(pentafluoroethyl)trifluorophosphate, bis[4-(diphenylsulfonio)phenyl]sulfide phenyltris(pentafluorophenyl)borate, [4-(2-thioxanthonylthio)phenyl]phenyl-2-thioxanthonylsulfonium phenyltris(pentafluorophenyl)borate, and 4-(phenylthio)phenyldiphenylsulfonium hexafluoroantimonate.

For the photocationic polymerization initiator, a commercially available product may be used. Examples of the commercially available products include "Silacure UVI-6970", "Silacure UVI-6974", "Silacure UVI-6990", and "Silacure UVI-950" (product names, all manufactured by Union Carbide Corporation, USA), "Omnirad 250", "Omnirad 261", "Omnirad 264", and "CG-24-61" (product names, all manufactured by IGM Resins B. V), "Optomer SP-150", "Optomer SP-151", "Optomer SP-170", and "Optomer SP-171" (product names, all manufactured by ADEKA Corporation), "DAICATII" (product name, manufactured by Daicel Corporation), "UVAC 1590", and "UVAC 1591" (product names, all manufactured by Daicel-Allnex Ltd.), "CI-2064," "CI-2639," "CI-2624," "CI-2481," "CI-2734," "CI-2855," "CI-2823," "CI-2758", and "CIT-1682" (product names, all manufactured by Nippon Soda Co., Ltd.), "PI-2074" (product name, tetrakis(pentafluorophenyl)borate tolylcumyliodonium salt, manufactured by Rhodia Inc.), "FFC509" (product name, manufactured by 3M Company), "BBI-102", "BBI-101", "BBI-103", "MPI-103", "TPS-103", "MDS-103", "DTS-103", "NAT-103", and "NDS-103" (product names, all manufactured by Midori Kagaku Co., Ltd.), and "CD-1010", "CD-1011", and "CD-1012" (product names, all manufactured by Sartomer, USA), "CPI-100P", and "CPI-101A" (product names, all manufactured by San-Apro Ltd.).

The content of the photocationic polymerization initiator is preferably from 0.01 to 10 parts by mass, more preferably from 0.1 to 7 parts by mass, still more preferably from 0.5 to 4 parts by mass with respect to 100 parts by mass of the total amount of a cationically curable compound in the curable epoxy composition. When the content is 0.01 parts by mass or more, photocuring is further more likely to proceed, and photocationic polymerization proceeds in a short time. The content of 10 parts by mass or less results in excellent storage stability.

### Polyol

The curable epoxy composition may contain a polyol. When the polyol is compounded, a cured product produced by curing the curable epoxy composition can enhance flexibility while maintaining the high glass transition temperature. Thus, the cured product of the curable epoxy composition has improved heat resistance. In addition, compounding the polyol allows the reaction to proceed slowly. For the polyol, a single type may be used alone or two or more type may be used in combination.

The polyol is a compound having two or more hydroxy groups in the molecule. Examples of the polyol include an aliphatic polyol, an alicyclic polyol, an aromatic polyol, a polyether polyol, a polyester polyol, a polycarbonate polyol, and a polyolefin polyol. Among these, a polyester polyol is preferable as the polyol from the viewpoint of further increasing the glass transition temperature and flexibility of a cured product.

An example of the polyester polyol includes a compound having two or more hydroxy groups and two or more ester bonds in the molecule. Examples of the polyester polyol include a polylactone polyol such as polycaprolactone polyol, an aliphatic polyester polyol, an aromatic polyester polyol, and an alicyclic polyester polyol.

As the polyester polyol, among these compounds, a polylactone polyol and/or an aliphatic polyester polyol is preferably contained from the viewpoint that a cured product has further improved flexibility while maintaining the high glass transition temperature. From the same viewpoint, as the polyester polyol, a polyester diol and/or a polyester triol is preferably contained.

The molecular weight of the polyol (in particular, polyester polyol) is not particularly limited, but is preferably 250 or more, more preferably 600 or more, still more preferably 1100 or more, and particularly preferably 1700 or more. The molecular weight of 250 or more (in particular, 600 or more) facilitates improvement in toughness of a cured product, further improving its flexibility. The molecular weight may be, for example, 100000 or less, 50000 or less, 10000 or less, or 4000 or less. The molecular weight of the polyol means a number average molecular weight in terms of standard polystyrene as measured by gel permeation chromatography (GPC).

The hydroxyl value of the polyol (in particular, polyester polyol) is not particularly limited, but is preferably 600 KOH mg/g or less, more preferably 200 KOH mg/g or less, still more preferably 100 KOH mg/g or less, and particularly preferably 80 KOH mg/g or less. The hydroxyl value of 600 KOH mg/g or less (in particular, 200 KOH mg/g or less) suppresses a chain transfer reaction in polymerization of the epoxy compound, facilitates an increase in the degree of polymerization of the epoxy main chain, and enables the glass transition temperature of a cured product to be maintained at a high level. The hydroxyl value can be measured by a potentiometric titration method in accordance with JIS K0070.

In a case in which the curable epoxy composition contains the polyol, the content proportion of the polyol in the curable epoxy composition is not particularly limited, but is preferably from 1 to 40 mass%, more preferably from 3 to 30 mass%, and still more preferably from 5 to 20 mass% with respect to the total amount (100 mass%) of the curable epoxy composition. The content proportion within the above-described range makes a cured product excellent in heat resistance and flexibility. In particular, the content proportion of the polyester polyol is preferably within the above-described range.

### Inorganic Filler

The curable epoxy composition may contain an inorganic filler. Compounding the inorganic filler can impart thixotropy to the composition, thereby suppressing sedimentation of a powder that may be contained in the composition, and can also impart a low linear thermal expansion property to a cured product. For the inorganic filler, a single type may be used alone or two or more types may be used in combination.

For the inorganic filler, a known or commonly used inorganic filler can be used, and examples of the inorganic filler include, but are not particularly limited to, powders such as silica, alumina, zircon, calcium silicate, calcium phosphate, calcium carbonate, magnesium carbonate, silicon carbide, silicon nitride, aluminum nitride, boron nitride, aluminum hydroxide, iron oxide, zinc oxide, zirconium oxide, magnesium oxide, titanium oxide, aluminum oxide, calcium sulfate, barium sulfate, forsterite, steatite, spinel, clay, kaolin, dolomite, hydroxyapatite, nepheline syenite, cristobalite, wollastonite, diatomaceous earth, and talc, and molded bodies (for example, spheroidized beads) thereof. In addition, the inorganic filler may be surface-treated or not surface-treated. Examples of the inorganic filler that has been surface-treated also include those produced by known or commonly used surface treatment of the aforementioned inorganic fillers. Among these inorganic fillers, silica, alumina, and aluminum nitride are preferable, and silica (a silica filler) is more preferable as the inorganic filler, from the viewpoint of allowing a cured product to have a low coefficient of linear thermal expansion and to be less likely to undergo warpage.

The silica is not particularly limited, and known or commonly used silica such as fused silica, crystalline silica, and high-purity synthetic silica can be used. For the silica, silica that has been subjected to known or commonly used surface treatment (for example, a surface treatment with a surface treating agent such as a metal oxide, a silane coupling agent, a titanium coupling agent, an organic acid, a polyol, or silicone) can also be used.

Examples of the silica include hydrophilic silica and hydrophobic silica, and hydrophobic silica is preferable from the viewpoint of easily increasing the viscosity of the curable epoxy composition, suppressing sedimentation of a solid component such as a microcapsule-type latent curing agent to improve the dispersibility, and further imparting thixotropy to the curable epoxy composition to achieve excellent workability such as impregnation property and casting property.

The hydrophobic silica is silica resulting from subjection of hydrophilic silica to hydrophobization treatment. Examples of the treating agent to be used in the hydrophobization treatment include organic silyl compounds such as methyltrichlorosilane, dimethyldichlorosilane, trimethylchlorosilane, hexamethyldisilazane, a methyltrialkoxysilane, a dimethyldialkoxysilane, a trimethylalkoxysilane, ethyl trichlorosilane, propyltrichlorosilane, hexyltrichlorosilane, a long-chain alkyltrichlorosilane, an ethyltrialkoxysilane, a propyltrialkoxysilane, a hexyltrialkoxysilane, a long-chain alkyltrialkoxysilane, methacrylsilane, a fluoroalkylsilane, and a perfluoroalkylsilane; and silicone compounds such as dimethylpolysiloxane (silicone oil), methylphenylpolysiloxane, methylhydrogenpolysiloxane, and a polysiloxane of amino-modified silicone and the like. In particular, a hydrophobization treatment using the polysiloxanes is preferred. For the hydrophobization treatment method, a known method can be used to perform the hydrophobization treatment, and examples of the method include a liquid phase method, a gas phase method, and an autoclave method.

The shape of the silica is not particularly limited, and examples of the shape include a powder shape, a spherical shape, a crushed shape, a fibrous shape, a needle shape, and a scaly shape. Of these, spherical silica is preferable, and truly spherical silica (for example, spherical silica having an aspect ratio of 1.2 or less) is particularly preferable, from the viewpoint of dispersibility.

The specific surface area of the silica is not particularly limited, but is preferably 10 m²/g or more, more preferably 40 m²/g or more, and still more preferably 70 m²/g or more, from the viewpoint of imparting the thixotropy to the curable epoxy composition to achieve excellent workability such as impregnation property and casting property.

The median particle size of the silica is not particularly limited, but is preferably 200 nm or less, more preferably 100 nm or less, and still more preferably 50 nm or less, from the viewpoint of imparting a thixotropy to the curable epoxy composition to achieve excellent workability such as impregnation property and casting property. The median particle size is, for example, 3 nm or more. In addition, the median particle size is preferably from 0.1 to 50 µm, and more preferably from 0.1 to 30 µm from the viewpoint of improving the low coefficient of linear thermal expansion, the strength, and the crack resistance of a cured product. It is to be noted that the median particle size means a particle size at a cumulative value of 50% in a particle size distribution (median diameter) measured by a laser diffraction/scattering method.

In a case in which the curable epoxy composition contains the inorganic filler, the content (amount compounded) of the inorganic filler in the curable epoxy composition is not particularly limited, but is preferably from 0.5 to 500 parts by mass, more preferably from 10 to 400 parts by mass, still more preferably from 30 to 350 parts by mass, and particularly preferably from 50 to 320 parts by mass with respect to 100 parts by mass of the total amount of a cationically curable compound in the curable epoxy composition. Within the above-described range of the content, the viscosity of the curable epoxy composition is moderately increased, and improved workability such as the impregnation property and the casting property.

In a case in which the curable epoxy composition contains the inorganic filler, the content proportion of the inorganic filler in the curable epoxy composition is not particularly limited, but is preferably from 0.5 to 95 mass%, more preferably from 30 to 90 mass%, still more preferably from 40 to 85 mass%, and particularly preferably from 45 to 80 mass% with respect to the total amount (100 mass%) of the curable epoxy composition.

The curable epoxy composition may contain a cationically curable compound other than the epoxy compound. The content proportion of the epoxy compound in the cationically curable compound in the curable epoxy composition is preferably 50 mass% or more, more preferably 60 mass% or more, still more preferably 70 mass% or more, yet still more preferably 80 mass% or more, even still more preferably 90 mass% or more, and particularly preferably 95 mass% or more with respect to the total amount (100 mass%) of all the curable compounds in the curable epoxy composition.

In addition, the curable epoxy compound is preferably substantially free of a curable compound (an additional curable compound) other than the cationically polymerizable compound. The phrase "substantially free of" as used herein means that a compound is not positively added, and excludes the case where the compound is inevitably present. The proportion of the additional curable compound in the curable epoxy composition is preferably less than 1 mass%, more preferably less than 0.5 mass%, and still more preferably less than 0.1 mass% with respect to the total amount (100 mass%) of the curable compounds contained in the curable epoxy composition. By being substantially free of the additional curable compound, the composition is less likely to be subjected to curing inhibition by oxygen upon photocuring, and can be more sufficiently cured.

Examples of the additional curable compound include an anionically polymerizable compound and a radical polymerizable compound. Examples of the radical polymerizable compound include a compound having a radioactive activated carbon-carbon double bond such as a compound having a (meth)acryloyl group (an acryloyl group and/or a methacryloyl group).

The content of the polyol in the curable epoxy composition is preferably from 5 to 45 parts by mass, more preferably from 10 to 35 parts by mass, and still more preferably from 15 to 30 parts by mass with respect to the total amount (100 parts by mass) of the curable compounds contained in the curable epoxy composition. Within the above-described range of the content, the further enhanced heat resistance and flexibility of a cured product result.

The curable epoxy composition may contain an additional component in addition to the components described above. For the additional component, commonly used additives can be used, as long as the viscosity and the transparency are not impaired, and examples of such commonly used additives include defoamers such as silicone-based and fluorine-based defoamers, a leveling agent, coupling agents such as silane coupling agents of γ-glycidoxypropyltrimethoxysilane, and 3-mercaptopropyltrimethoxysilane, a surfactant, a flame retardant, a colorant, an antioxidant, an ultraviolet-ray absorber, an ion adsorbent, a coloring agent, phosphors (for example, inorganic phosphor fine particles such as YAG-based phosphor fine particles and silicate-based phosphor fine particles), a mold release agent, a thickener, a dispersant, a rust inhibitor, a corrosion inhibitor, a freezing point depressant, an antiwear additive, and the like. For each additional component, a single type may be used alone or two or more types may be used in combination.

The curable epoxy composition is preferably substantially free of a curing agent (an additional curing agent) other than the photocationic polymerization initiator. The content of the additional curing agent is preferably less than 0.01 parts by mass and more preferably less than 0.005 parts by mass with respect to the total amount (100 parts by mass) of the cationically curable compound contained in the curable epoxy composition. Being substantially free of the additional curing agent makes the curable epoxy composition excellent in storage stability.

Examples of the additional curing agent include a thermal cationic polymerization initiator, an anionic polymerization initiator, a radical polymerization initiator, a curing accelerator, and a curing catalyst.

The curable epoxy composition is preferably liquid at 25°C. Being liquid at 25°C makes the curable epoxy composition excellent in workability such as the impregnation property, casting property, and filling property. The viscosity of the curable epoxy composition at 25°C is not particularly limited, but is preferably 330 mPa·s or more (for example, from 330 to 100000 mPa·s). When the viscosity is 330 mPa·s or more, the composition does not drip off after impregnation, and the workability during impregnation and casting tends to improve. When the viscosity is 100000 mPa·s or less, the impregnation property and the workability upon casting tend to improve and a cured product is less likely to generate a defect due to poor casting. The viscosity of the curable epoxy composition at 25°C can be measured, for example, using a digital viscometer (model No. "DVU-EII", manufactured by TOKIMEC INC.) under the conditions: rotor: standard 1° 34' × R24; temperature: 25°C; revolution per minutes: from 0.5 to 10 rpm.

In one aspect of the curable epoxy composition (for example, in a case in which the inorganic filler is not contained), the viscosity of the curable epoxy composition at 25°C is more preferably 400 mPa·s or more (for example, from 400 to 10000 mPa·s), and still more preferably 450 mPa·s or more (for example, from 450 to 1000 mPa·s). In another aspect of the curable epoxy composition (for example, in case of including the inorganic filler), the viscosity of the curable epoxy composition at 25°C is more preferably 2000 mPa·s or more (for example, from 2000 to 100000), or 8000 mPa·s or more (for example, from 8000 to 80000 mPa·s), and still more preferably 10000 mPa·s or more (for example, from 10000 to 70000 mPa·s).

The curable epoxy composition is not particularly limited, but can be prepared by stirring and mixing the above-described components under heating, if necessary. The curable epoxy composition can be used as a one-component composition in which the components preliminarily mixed is used as it is, or alternatively, used as a multi-component (for example, two-component) composition in which two or more components that have been separately stored are mixed before use and used. The stirring and mixing method is not particularly limited, and a known or commonly used stirring and mixing means can be used, for example, including various mixers such as a dissolver and a homogenizer, a kneader, a roll mill, a bead mill, and a planetary centrifugal mixer. In addition, after the stirring and mixing, degassing may be performed under vacuum.

The curable epoxy composition of the present disclosure is curable in a short time in the presence of oxygen, and is excellent in filling property. Therefore, when a member having a complicated structure is coated with the curable epoxy composition, dripping of the composition is less likely to occur during curing, and stickiness of a resin surface is reduced at an early stage, resulting in excellent handleability. In addition, the curing is achieved in a short time, thereby leading to a reduction in the amount of CO₂ emission and a reduction in environmental load.

### Cured product

By curing the curable epoxy composition, a cured product can be produced. The curable composition has a photocurability and a thermal curability, and it is preferable to perform photocuring and thermal curing in this order. First, photocuring of the composition suppresses dripping and stickiness (tackiness) after coating with the curable epoxy composition, making handleability excellent, and thermal curing thereof after this allows thermal curing to be performed in a short time.

The curable epoxy composition can be coated by a known or commonly used method. When an adherend such as a component included in a rotary electric machine having a complicated shape such as a coil or a semiconductor is coated with the curable epoxy composition, the adherend to be coated may be impregnated with the curable epoxy composition. After impregnation, the adherend is pulled up from the curable epoxy composition and irradiated with an active energy ray to perform photocuring.

Examples of the active energy ray include ionizing radiation such as an α-ray, a β-ray, a γ-ray, a neutron ray, and an electron beam, and an ultraviolet ray. The conditions for the active energy ray radiation are appropriately set depending on the type of the active energy ray, and for example, the irradiance is preferably from 5 to 300 mW/cm², the irradiation dose is preferably from 50 to 18000 mJ/cm², and the irradiation time is preferably from 10 seconds to 5 minutes, more preferably from 20 seconds to 1 minute.

Thermal curing is performed following the photocuring. A temperature in the thermal curing (curing temperature) is not particularly limited, but is preferably from 45 to 200°C, more preferably from 50 to 190°C, and still more preferably from 55 to 180°C. A heating time (curing time) upon curing is not particularly limited, but is preferably from 5 to 60 minutes, and more preferably from 10 to 45 minutes. The curable epoxy composition can shorten the time for thermal curing by performing thermal curing after photocuring, and can provide a cured product having a high degree of cure even with the curing time described above. In addition, each curing can be performed in one step or in multi steps of two or more steps.

The cured product preferably has a glass transition temperature (Tg-DMA) of 78°C or higher, more preferably 80°C or higher, and still more preferably 100°C or higher. The glass transition temperature of 78°C or higher makes the heat resistance excellent.

The glass transition temperature (Tg-TMA) of the cured product is preferably 40°C or higher, more preferably 50°C or higher, and still more preferably 60°C or higher. The glass transition temperature of 40°C or higher results in excellent heat resistance.

In one embodiment (for example, in case of the curable epoxy composition being free of the inorganic filler), the modulus of elasticity of the cured product at 25°C is preferably from 1.0 to 10.0 GPa, more preferably from 2.0 to 6.0 GPa, and still more preferably from 3.0 to 5.0 GPa. In another aspect (for example, in case of the curable epoxy composition containing the inorganic filler), the modulus of elasticity of the cured product at 25°C is preferably from 12.0 to 30.0 GPa, more preferably from 14.0 to 28.0 GPa, and still more preferably from 16.0 to 26.0 GPa. When the modulus of elasticity is not lower than the lower limit value, the cured product follows the movement of an adherend such as a rotary electric machine or a semiconductor, with more excellent adhesiveness to the adherend. When the modulus of elasticity is not higher than the upper limit value, the internal stress becomes more appropriate. The modulus of elasticity can be measured by viscoelastic measurement.

In one embodiment (for example, in case of the curable epoxy composition being free of the inorganic filler), the coefficient of linear thermal expansion (α1) of the cured product in a temperature region lower than Tg of the cured product is preferably 90 ppm/°C or less (for example, from 20 to 90 ppm/°C), more preferably 80 ppm/°C or less (for example, from 30 to 80 ppm/°C), and still more preferably 70 ppm/°C or less (for example, in from 40 to 70 ppm/°C). In another embodiment (for example, in case of the curable epoxy composition containing the inorganic filler), the coefficient of linear thermal expansion (α1) is preferably 200 ppm/°C or less (for example, from 5 to 200 ppm/°C), more preferably 100 ppm/°C or less (for example, from 7 to 100 ppm/°C), and still more preferably 30 ppm/°C or less (for example, from 10 to 30 ppm/°C). When the coefficient of linear thermal expansion (α1) is not higher than the upper limit value, the cured product is difficult to deform by temperature change, and has excellent coatability on an adherend.

In one embodiment (for example, in case of the curable epoxy composition being free of the inorganic filler), the coefficient of linear thermal expansion (α2) of the cured product in a temperature region higher than Tg thereof is preferably 220 ppm/°C or less (for example, from 60 to 220 ppm/°C), more preferably 200 ppm/°C or less (for example, from 70 to 200 ppm/°C), and still more preferably 180 ppm/°C or less (for example, from 100 to 180 ppm/°C). In another embodiment (for example, in case of the curable epoxy composition containing the inorganic filler), the coefficient of linear thermal expansion (α2) is preferably 90 ppm/°C or less (for example, from 20 to 90 ppm/°C), more preferably 85 ppm/°C or less (for example, from 30 to 85 ppm/°C), and still more preferably 80 ppm/°C or less (for example, from 40 to 80 ppm/°C). When the coefficient of linear thermal expansion (α2) is not higher than the upper limit value, the cured product is difficult to deform by temperature change, and has excellent coatability on an adherend.

The curable epoxy composition and the cured product are used in parts included in a rotary electric machine (rotary electric machine applications) and/or semiconductors. The cured product has excellent heat resistance, and therefore can be preferably used in parts used in an elevated heat environment, in particular in an automobile part (for example, automobile EV motor applications). Specific examples of the usage of the cured product include insulating materials, coating materials, and adhesives. The curable epoxy composition is excellent in the wettability to an object to be coated, impregnation property, and filling property. Therefore, the curable epoxy composition can be preferably used in processes such as atmospheric pressure impregnation, vacuum impregnation, pressure impregnation, and dipping.

Examples of the rotary electric machine applications include rotor wire protection applications (a winding coating application, a winding tip coating application, and the like), stator coil impregnation/casting applications, stator impregnation/casting applications including an application for coating the entire stator, a magnet fixation application for fixing a magnet inserted into a hole provided in a rotor core or a stator core to an inner wall of the hole, and a gap filling application between the hole and the magnet, in the rotor and/or the stator.

Among the applications of the curable epoxy composition and the cured product, coil impregnation applications, such as coil (wire or winding) impregnation/casting applications in a stator or a rotor of a rotary electric machine are preferable.

The use of the cured product for the rotary electric machine applications provides rotary electric machines including the cured product, such as: a rotor for a rotary electric machine, including the cured product coating a winding of the rotor; a stator for a rotary electric machine, including the cured product being formed to cover a stator coil; a stator for a rotary electric machine, including the cured product coating the entire stator; a rotor or a stator for a rotary electric machine, including a rotor core or a stator core having a hole, a magnet inserted into the hole, and the cured product allowing the magnet to adhere to an inner wall of the hole; a rotor or a stator for a rotary electric machine, including a rotor core or a stator core having a hole, a magnet inserted into the hole, and the cured product filling a gap between the magnet and an inner wall of the hole.

Examples of the semiconductor applications include a semiconductor sealing application and a semiconductor underfill application. Using the cured product for the semiconductor application makes it possible to cure the curable epoxy composition in a short time in the presence of oxygen, allowing thermal damage to the semiconductor to be suppressed. In addition, the semiconductor is preferably power semiconductors. In a situation where the power semiconductor is required to have a higher insulation property than a normal semiconductor, the curable epoxy composition is less likely to drip down and thus can be easily formed into a thick film even when the curable epoxy composition is coated again and again to form a thick film, enabling a sufficient insulation property to be imparted.

Each aspect disclosed in the present description can be combined with any other feature disclosed in the present description. Each of the configurations, combinations thereof, and the like in each embodiment are exemplary, and additions, omissions, replacements, and other changes of the configurations can be appropriately made without departing from the spirit of the present disclosure. Moreover, each of the inventions according to the present disclosure is not limited by the embodiments or the following Examples, but is limited only by the claims.

### Examples

Hereinafter, an embodiment of the present disclosure will be described in more detail based on Examples.

### Example 1

### Preparation of Curable Composition

An ointment container was charged with an alicyclic epoxy compound (product name "CELLOXIDE 2021P", manufactured by Daicel Corporation), a polyester polyol (product name "PLACCEL 220", manufactured by Daicel Corporation), diphenyl[4-(phenylthio)phenyl]sulfonium tris(pentafluoroethyl)trifluorophosphate (curing agent A) as a UV cationic polymerization initiator and homogeneously mixed in a compounding proportion (unit: part by mass) shown in Table 1 using a rotation/revolution stirring apparatus (product name "THINKY MIXER AR-250," manufactured by Thinky Corporation), and further defoamed to prepare a curable composition that was liquid at 25°C.

### Fabrication of Cured Product

The curable composition produced above was filled in a mold, sandwiched between glass plates, and the irradiance was adjusted with an ultraviolet intensity meter (product name "UV Intensity Meter UIT-201," manufactured by Ushio Inc.), and then the surface was irradiated with ultraviolet rays in the air using a UV irradiator (product name "San Ace 120", manufactured by Sanyo Denki Co., Ltd.), followed by thermal curing in an oven to fabricate a cured product. The irradiation conditions are shown in Table 2.

### Examples 2 to 8 and Comparative Example 1

### Preparation of Curable Composition

Curable compositions that were liquid at 25°C were prepared in the same manner as in Example 1 except that the compositions of the curable epoxy compositions were changed to the compositions shown in Table 1.

### Fabrication of Cured Product

The curable composition produced above was filled in a mold, sandwiched between glass plates, and the irradiance was adjusted with an ultraviolet intensity meter (product name "UV Intensity Meter UIT-201," manufactured by Ushio Inc.), and then the surface was irradiated with ultraviolet rays in the air using a UV irradiator (product name "San Ace 120", manufactured by Sanyo Denki Co., Ltd.), followed by thermal curing in an oven to fabricate a cured product. The irradiation conditions are as shown in Table 2 or 3.

### [Table 1]

**Table 1**

| | | | Examples | | | | | | | | Comparative Example |
|---|---|---|---|---|---|---|---|---|---|---|---|
| | | | 1 | 2 | 3 | 4 | 5 | 6 | 7 | 8 | 1 |
| | Epoxy compound | CELLOXIDE 2021P | 80 | - | - | - | - | 20 | 20 | - | - |
| | | TEPIC-FL | - | 100 | - | - | - | - | - | - | - |
| | | TEPIC-UC | - | - | 100 | - | - | - | - | - | - |
| | | YX8000 | - | - | - | 100 | - | - | - | - | - |
| | | jER 806 | - | - | - | - | 100 | - | - | - | - |
| Curable composition | | YD128 | - | - | - | - | - | 5 | 5 | 25 | - |
| | Polyol | PCL | 20 | - | - | - | - | - | - | - | - |
| | Acrylic-based monomer | Viscoat #230 | - | - | - | - | - | - | - | - | 100 |
| | Additive | Silica Filler | - | - | - | - | - | 75 | 75 | 75 | - |
| | UV cationic polymerization initiator | Curing agent A | 2 | 2 | 2 | 2 | 2 | 0.5 | - | 0.5 | - |
| | | Curing agent B | - | - | - | - | - | - | 0.5 | - | - |
| | Radical polymerization initiator | Omnirad 184 | - | - | - | - | - | - | - | - | 0.5 |

The components that were used in Examples and Comparative Example are as follows.

### Epoxy Compound

CELLOXIDE 2021P: Product name "CELLOXIDE 2021P" (3,4- epoxycyclohexylmethyl(3,4-epoxy)cyclohexanecarboxylate, manufactured by Daicel Corporation
TEPIC-FL: product name "TEPIC-FL," triepoxy isocyanurate type compound, manufactured by Nissan Chemival Corporation
TEPIC-UC: product name "TEPIC-UC," a hexaepoxy isocyanurate type compound, manufactured by Nissan Chemical Corporation
YX8000: product name "YX8000," a hydrogenated bisphenol type diglycidyl compound, manufactured by Mitsubishi Chemical Corporation
jER 806: product name "jER 806," a bisphenol F type epoxy resin, manufactured by Mitsubishi Chemical Corporation
YD-128: product name "YD-128," a bisphenol A diglycidyl ether, manufactured by NIPPON STEEL Chemical & Material Co., Ltd.

### Polyol

PCL: product name "PLACCEL 220," an aliphatic polyester diol, molecular weight: 2000, hydroxyl value: 56.8 KOH mg/g, manufactured by Daicel Corporation

### Acrylic-Based Monomer

Viscoat #230: product name "Viscoat #230," 1, 6-hexanediol diacrylate, manufactured by Osaka Organic Chemical Industry Ltd.

### Additive

Silica filler: non-surface-treated, median particle size of from about 0.1 to 100 µm, in spherical shape, manufactured by Denka Company Limited.
UV Cationic Polymerization Initiator
Curing agent A: Diphenyl[4-(phenylthio)phenyl]sulfonium tris(pentafluoroethyl)trifluorophosphate
Curing agent B: Tiarylsulfonium salt

### Radical Polymerization Initiator

Omnirad 184: product name "Omnirad 184," 1-hydroxycyclohexyl phenyl ketone, manufactured by IGM Resins B. V.

### Evaluation

The curable compositions and the cured products produced in Examples and Comparative Example were subjected to the following evaluation tests. The physical properties of the cured product of Comparative Example 1 are values obtained by evaluating a cured product fabricated by ultraviolet irradiation under nitrogen gas flow instead of in the air.

### Measurement of Viscoelasticity

For the cured product, the viscoelasticity measurement was performed using a solid viscoelasticity measuring apparatus (product name "DMA 7100", manufactured by Hitachi High-Tech Science Corporation) under conditions of a rate of temperature rise of 5°C/min, a measurement temperature range from -50 to 300°C, a deformation mode of tensile, and a frequency of 1 Hz under nitrogen gas flow, and the modulus of elasticity at 25°C was measured. The temperature at the inflection point of the obtained temperature thermal history curve was then determined as the glass transition temperature (Tg-DMA).

### Thermomechanical Analysis

The cured product was subjected to thermomechanical analysis using a thermomechanical analyzer (product name "TMA 6100", manufactured by Hitachi High-Tech Science Corporation) under nitrogen stream at a rate of temperature rise of 5°C/min and a measurement temperature of from 30 to 300°C. The temperature at the inflection point of the obtained temperature thermal history curve was then determined as the glass transition temperature (Tg-TMA), and the coefficients of linear thermal expansion (α1, α2) were calculated from the curve before and after the glass transition temperature.

### Differential Scanning Calorimetry

The curable compositions of Examples 6 to 8 were irradiated with ultraviolet rays using a differential scanning calorimeter (product name "DSC 6200" manufactured by Seiko Instruments Inc.) equipped with a UV irradiator (product name "San Ace 120," manufactured by SANYO DENKI CO., LTD.) under nitrogen gas flow at a temperature of 30°C and an irradiation intensity of 200 mW × 10 sec. The sample after the ultraviolet irradiation was subjected to differential scanning calorimetry under nitrogen gas flow under the conditions of a rate of temperature rise of 10°C/min and a measurement temperature range from 30 to 300°C. Then, heat generation from the inflection point of the obtained temperature thermal history curve (the glass transition temperature) to 300°C was defined as residual heat generation to calculate a degree of cure.

### Curability (i)

After the ultraviolet irradiation in the air performed in the fabrication of the cured product, a case in which there was no observed curing failure was evaluated as "○", and a case in which there was an observed curing failure was evaluated as "×".

### Curability (ii)

The cured product after thermal curing performed in the fabrication of the cured product was evaluated as "○" in a case in which there was no observed curing failure, and was evaluated as "×" in a case in which there was an observed curing failure.

### Handleability

After the ultraviolet irradiation in the air performed in the fabrication of the cured product, a case in which dripping did not occur and there was no observed tackiness was evaluated as "○", and a case in which dripping occurred or there was an observed tackiness was evaluated as "×".

### [Table 2]

**Table 2**

| | | | Examples | | | | | Comparative Example |
|---|---|---|---|---|---|---|---|---|
| | | | 1 | 2 | 3 | 4 | 5 | 1 |
| Curing conditions | UV irradiation | | 100 mW/cm² × 30 sec | 100 mW/cm² × 30 sec | 100 mW/cm² × 30 sec | 100 mW/cm² × 30 sec | 100 mW/cm² × 30 sec | 100 mW/cm² × 30 sec |
| | Post curing | | 180°C × 30 min | 180°C × 30 min | 180°C × 30 min | 180°C × 30 min | 180°C × 30 min | 180°C × 30 min |
| Physical properties of cured product | Tg-DMA | °C | 133.0 | 80.2 | 99.1 | 105.6 | 157.6 | 77.6 |
| | Modulus of elasticity | GPa | 3.6 | 2.0 | 3.5 | 3.0 | 4.0 | 2.0 |
| | Tg-TMA | °C | 99 | 68 | 74 | 98 | 87 | 31 |
| | α1 | ppm/°C | 84.0 | 69.3 | 46.0 | 44.5 | 55.0 | 91.0 |
| | α2 | ppm/°C | 74 | 173 | 104 | 199 | 153 | 162 |
| Evaluation | Curability (i) | | ○ | ○ | ○ | ○ | ○ | × |
| | Curability (ii) | | ○ | ○ | ○ | ○ | ○ | × |
| | Handleability | | ○ | ○ | ○ | ○ | ○ | × |

### [Table 3]

**Table 3**

| | | | Examples | | |
|---|---|---|---|---|---|
| | | | 6 | 7 | 8 |
| Curing conditions | UV irradiation | | 200 mW/cm² × 30 sec | 200 mW/cm² × 30 sec | 200 mW/cm² × 30 sec |
| | Post curing | | 150°C × 15 min | 150°C × 15 min | 150°C × 15 min |
| Physical properties of cured product | Tg-DMA | °C | 184.9 | 205.6 | 91.6 |
| | Modulus of elasticity | GPa | 19.4 | 21.3 | 18.1 |
| | Tg-TMA | °C | 152 | 181 | 85 |
| | α1 | ppm/°C | 17.7 | 19.4 | 145.6 |
| | α2 | ppm/°C | 57.3 | 73.9 | 70.0 |
| | Degree of cure | % | 90 | nearly equal 100 | nearly equal 100 |
| Evaluation | Curability (i) | | ○ | ○ | ○ |
| | Curability (ii) | | ○ | ○ | ○ |
| | Handleability | | ○ | ○ | ○ |

As can be seen from Table 2, the curable compositions of Examples 1 to 5 were cured by ultraviolet irradiation in the air, and were excellent in handleability. In addition, the thermal curing was achieved in a short time of 30 minutes, and the curability after the thermal curing was excellent. In contrast, the curable composition of Comparative Example 1 was insufficiently cured by ultraviolet irradiation in the air, and was inferior in handleability. In addition, for Comparative Example 1, the curing did not sufficiently proceed by the ultraviolet irradiation in the air, and therefore the curing was insufficient when the thermal curing time was 30 minutes.

The curable compositions of Examples 6 to 8, which were examples containing the inorganic filler, as can be seen from Table 3, were cured by ultraviolet irradiation in the air, and were excellent in handleability. In addition, the thermal curing was achieved in a short time of 15 minutes, and the curability after the thermal curing was excellent. Furthermore, the curable compositions in Examples were liquid at 25°C, and were also excellent in filling property and impregnation property.

Hereinafter, variations of the invention according to the present disclosure will be described.
[ Appendix 1] A curable epoxy composition containing:
   an epoxy compound having an epoxy group in the molecule; and
   a photocationic polymerization initiator,
   wherein the curable epoxy composition is for a rotary electric machine and/or a semiconductor.
[Appendix 2] The curable epoxy composition according to Appendix 1, wherein, as the epoxy compound, an alicyclic epoxy compound is contained.
[Appendix 3] The curable epoxy composition according to Appendixes 1 or 2, wherein, as the epoxy compound, an aromatic epoxy compound is contained.
[Appendix 4] The curable epoxy composition according to any one of Appendixes 1 to 3, wherein, as the epoxy compound, an aliphatic epoxy compound is contained.
[ Appendix 5] The curable epoxy composition according to any one of Appendixes 1 to 4, wherein, as the epoxy compound, a heterocyclic epoxy compound is contained.
[Appendix 6] The curable epoxy composition according to Appendix 5, wherein, as the heterocyclic epoxy compound, an epoxy compound having an isocyanuric ring is contained.
[Appendix 7] The curable epoxy composition according to Appendix 6, wherein, as the epoxy compound having an isocyanuric ring, a compound represented by the following Formula (iii) is contained: 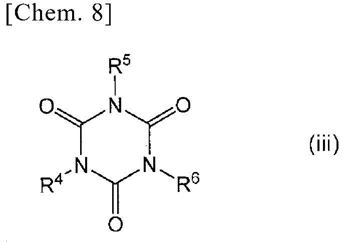 where R⁴ to R⁶ are the same or different, and each represent a hydrogen atom or a monovalent organic group, with the proviso that at least one of R⁴ to R⁶ is a monovalent organic group containing an epoxy group.
[Appendix 8] The curable epoxy composition according to any one of Appendixes 5 to 7, wherein, as the heterocyclic epoxy compound, an epoxy compound having a glycoluril ring is contained.
[Appendix 9] The curable epoxy composition according to Appendix 8, wherein, as the epoxy compound having a glycoluril ring, a compound represented by the following Formula (iv) is contained: 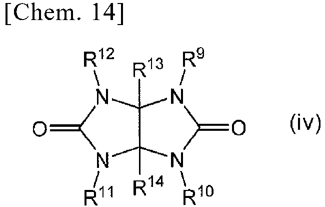
where
R⁹ to R¹² are the same or different, and each represent a hydrogen atom or a monovalent organic group, with the proviso that at least one of R⁹ to R¹² is a monovalent organic group containing an epoxy group, and
R¹³ and R¹⁴ are the same or different, and each represent a hydrogen atom or a monovalent organic group.
[Appendix 10] The curable epoxy composition according to any one of Appendixes 1 to 9, wherein a content proportion of the epoxy compound is from 60 to 99.5 mass% with respect to a total amount (100 mass%) of the curable epoxy composition.
[Appendix 11] The curable epoxy composition according to any one of Appendixes 1 to 10, which is substantially free of a curing agent other than the photocationic polymerization initiator.
[Appendix 12] The curable epoxy composition according to any one of Appendixes 1 to 11, containing a polyol.
[Appendix 13] The curable epoxy composition according to Appendix 12, wherein, as the polyol, a polyester polyol is contained.
[Appendix 14] The curable epoxy composition according to Appendix 12 or 13, wherein the polyol has a molecular weight of from 600 to 50000.
[Appendix 15] The curable epoxy composition according to any one of Appendixes 12 to 14, wherein the polyol has a hydroxyl value of 600 KOH mg/g or less.
[Appendix 16] The curable epoxy composition according to any one of Appendixes 12 to 15, wherein a content proportion of the polyol is from 1 to 40 mass% with respect to a total amount (100 mass%) of the curable epoxy composition.
[Appendix 17] The curable epoxy composition according to any one of Appendixes 1 to 16, wherein a content proportion of the epoxy compound with respect to a total amount of a cationically curable compound is 90 mass% or more.
[Appendix 18] The curable epoxy composition according to any one of Appendixes 1 to 17, which is substantially free of a radical polymerizable compound.
[Appendix 19] The curable epoxy composition according to any one of Appendixes 1 to 18, containing an inorganic filler.
[Appendix 20] The curable epoxy composition according to Appendix 19, wherein, as the inorganic filler, silica is contained.
[Appendix 21] The curable epoxy composition according to Appendix 20, wherein the silica has a specific surface area of 10 m²/g or more.
[Appendix 22] The curable epoxy composition according to Appendix 20 or 21, wherein the silica has a median particle size of from 3 nm to 200 nm.
[Appendix 23] The curable epoxy composition according to Appendix 20 or 21, wherein the silica has a median particle size of from 0.1 to 30 µm.
[Appendix 24] The curable epoxy composition according to any one of Appendixes 20 to 23, wherein a content of the inorganic filler is from 0.5 to 500 parts by mass with respect to 100 parts by mass of a total amount of a cationically curable compound contained in the curable epoxy composition.
[Appendix 25] The curable epoxy composition according to any one of Appendixes 1 to 24, which is liquid at 25°C.
[Appendix 26] The curable epoxy composition according to any one of Appendixes 1 to 25, which is for impregnation of a stator coil of the rotary electric machine, or for magnet fixation to fix a magnet inserted into a hole provided in a rotor core of the rotary electric machine to an inner wall of the hole.
[Appendix 27] A cured product of the curable epoxy composition described in any one of Appendixes 1 to 26.
[Appendix 28] A stator for a rotary electric machine, the stator including the cured product described in Appendix 27, the cured product formed to cover a stator coil.
[Appendix 29] A rotor for a rotary electric machine, the rotor including the cured product described in Appendix 27, the cured product coating a winding of the rotor.

## Claims

1. A curable epoxy composition comprising:
an epoxy compound having an epoxy group in the molecule; and
a photocationic polymerization initiator,
wherein the curable epoxy composition is for a rotary electric machine and/or a semiconductor.

2. The curable epoxy composition according to claim 1, which is substantially free of a curing agent other than the photocationic polymerization initiator.

3. The curable epoxy composition according to claim 1 or 2, comprising a polyol.

4. The curable epoxy composition according to claim 1 or 2, wherein a content proportion of the epoxy compound with respect to a total amount of a cationically curable compound is 90 mass% or more.

5. The curable epoxy composition according to claim 1 or 2, which is substantially free of a radical polymerizable compound.

6. The curable epoxy composition according to claim 1 or 2, comprising an inorganic filler.

7. The curable epoxy composition according to claim 1 or 2, which is liquid at 25°C.

8. The curable epoxy composition according to claim 1 or 2, which is for impregnation of a stator coil of the rotary electric machine, or for magnet fixation to fix a magnet inserted into a hole provided in a rotor core of the rotary electric machine to an inner wall of the hole.

9. A cured product of the curable epoxy composition described in claim 1 or 2.

10. A stator for a rotary electric machine, the stator comprising the cured product described in claim 9, the cured product formed to cover a stator coil.

11. A rotor for a rotary electric machine, the rotor comprising the cured product described in claim 9, the cured product coating a winding of the rotor.
